# EUROPÄISCHE PATENTSCHRIFT

(11) **EP 1 033 769 B1**
(45) Veröffentlichungstag und Bekanntmachung des Hinweises auf die Patenterteilung: **22.12.2004**
(21) Anmeldenummer: 00100713.7
(22) Anmeldetag: 14.01.2000
(51) Int. Cl.: H01M 8/06, H01M 8/04

(54) **Brennstoffzellensystem mit zugeordneter Wasserstofferzeugungsanlage**
Fuel cell system having an associated hydrogen generating device
Système de cellules à combustible comprenant un dispositif produisant de l'hydrogène

(30) Priorität: 02.03.1999 DE 19908905
(43) Veröffentlichungstag der Anmeldung: 06.09.2000
(73) Patentinhaber: DaimlerChrysler AG, 70567 Stuttgart (DE)
(72) Erfinder: Autenrieth, Rainer, 89155 Erbach (DE); Docter, Andreas, Dr., 88471 Laupheim (DE); Lamm, Arnold, Dr., 89275 Elchingen (DE); Poschmann, Thomas, 89073 Ulm (DE); Wieland, Steffen, 70180 Stuttgart (DE)

(56) Entgegenhaltungen:
- DE-A- 19 535 288
- US-A- 5 360 679
- US-A- 5 658 681
- DATABASE WPI Section Ch, Week 199529 Derwent Publications Ltd., London, GB; Class L03, AN 1995-221529 XP002140312 & JP 07 135009 A (AGENCY OF IND SCI & TECHNOLOGY), 23. Mai 1995 (1995-05-23)

## Beschreibung

Die Erfindung bezieht sich auf ein Brennstoffzellensystem nach dem Oberbegriff des Anspruchs 1. Neben einer oder mehreren Brennstoffzellen beinhaltet dieses System eine Wasserstofferzeugungsanlage zur Speisung der Brennstoffzellenanode mit einem wasserstoffhaltigen Produktgas aus einer Umsetzungsreaktion eines Kohlenwasserstoff- oder Kohlenwasserstoffderivat-Einsatzstoffs, wie Benzin, Diesel oder Methanol, unter Beteiligung von über ein Wasserzufuhrsystem zugeführtem Wasser.

Derartige Brennstoffzellensysteme mit integrierter Wasserstofferzeugung werden in jüngerer Zeit verstärkt für den Einsatz in Brennstoffzellenfahrzeugen in Betracht gezogen, in denen dann der Einsatzstoff vorzugsweise in flüssiger Form mitgeführt und die Brennstoffzellen sehr effektiv mit Wasserstoff betrieben werden können, ohne daß voluminöse und schwere Wasserstoffspeicher benötigt werden.

Bei einem bekannten Systemtyp dient zur Wasserstofferzeugung eine Reformierungsanlage, in welcher der Einsatzstoff durch eine endotherme Wasserdampfreformierungsreaktion umgesetzt wird, die ggf. mit einer partiellen Oxidationsreaktion zu einem autothermen Umsetzungsprozeß kombiniert wird. Dabei entsteht in einem entsprechenden Umsetzungsreaktor ein wasserstoffreiches Produkt-gas, das jedoch häufig noch Kohlenmonoxid in einem für die Brennstoffzellenanode schädlichen Anteil enthält. Es ist daher bekannt, eine Gasreinigungsstufe der Reaktoreinheit nachzuschalten oder in diese zu integrieren, z.B. in Form einer selektiv wasserstoffabtrennenden Membran, einer CO-Oxidationseinheit zur selektiven CO-Oxidation und/oder einer Wassergas-Shiftreaktoreinheit zur Umwandlung von Kohlenmonoxid in Kohlendioxid über die Wassergasgleichgewichtsreaktion.

In der US 5.360.679 ist ein System beschreiben, welches aus natürlichem Gas Wasserstoff zum Umsetzen in einer Brennstoffzelle erzeugt. Das dort beschreibene System, welches zum Einsatz in Kraftwerken vorgesehen ist, nutzt nach einer Oxidationsstufe und einer Entschwefelung des natürlichen Gases eine Dampfreformierung mit nachgeschalteten Wasser-Gasshiftstufen und einer Selektiven CO-Oxidation zur Wasserstofferzeugung. Um flüssigens Wasser aus den Gasströmen, welche Wasssertröpfchen mitreissen können, abzuscheiden, sind an verschiedeben Stellen des Systems Wasserabscheider vorgesehen. Das in den Wasserabscheidern anfallende Wasser wird gesammelt und dem System wieder zugeführt, insbesondere zur Verwendung für die Dampfreformierung.

Bei einem in der Patentschrift US 4.365.006 beschriebenen System wird das Kathodenabgas einer Brennstoffzelle einem Wasserstofferzeugungsreaktor zugeführt, dem außerdem ein Kohlenwasserstoffoder Kohlenwasserstoffderivat-Einsatzstoff zugeleitet wird. Der Reaktor ist zweistufig aus einer eintrittsseitigen partiellen O-xidationseinheit und einer austrittsseitigen Dampfreformierungseinheit aufgebaut, und das von ihm erzeugte Produktgas wird direkt ohne weitere Gasreinigung als Brennstoffgas in die Brennstoffzellenanode eingespeist. Das Anodenabgas wird in einem Brenner genutzt, der zur Beheizung des Reaktors und eines Verdampfers dient.

Aus der Offenlegungsschrift EP 0 642 184 A2 ist es bekannt, sowohl das Kathodenabgas wie auch das Anodenabgas einer Brennstoffzelle in einem katalytischen Brenner zur Beheizung eines Reformierungsreaktors zu nutzen, der aus einem zu reformierenden Einsatzstoff, insbesondere Erdgas, ein wasserstoffhaltiges Produktgas erzeugt, das ohne weitere Gasreinigung der Brennstoffzellenanode zugeführt wird.

In der Offenlegungsschrift DE 40 32 652 A1 ist ein Brennstoffzellensystem der eingangs genannten Art beschrieben, bei dem die Wasserstofferzeugungsanlage von einem Dampfreformierungsreaktor, dem als Einsatzstoff z.B. Erdgas zugeführt wird, einer zweistufigen Gasreinigungsstufe zur CO-Verminderung, einem Wasserabscheider und einer Einheit zum Auswaschen von Kohlendioxid gebildet ist. Der Reformierungsreaktor wird vom Rauchgas eines Brenners beheizt, dem als Sauerstofflieferant wenigstens ein Teil des Kathodenabgases der Brennstoffzelle und als Brennstoff ein abgezweigter Teilstrom des zu reformierenden Einsatzstoffs und/oder ein Teil des Anodenabgases der Brennstoffzelle zugeführt wird. Je ein weiterer Teil des Anodenabgases kann der ersten und der zweiten Gasreinigungsstufe zugeführt werden.

Aus der Patentschrift US 4.759.997 ist es bekannt, das Abgas einer Brennstoffzellenkathode und eines beheizenden Brenners einer der Brennstoffzelle zugeordneten Reformierungseinheit einem katalytischen Zusatzbrenner zuzuführen und mit dessen Abgasstrom eine Turbine anzutreiben, die mechanisch mit einem Kompressor gekoppelt ist, der zur Verdichtung von Luft dient, die der Brennstoffzellenkathode und dem Brenner der Reformierungseinheit zugeführt wird.

Der Erfindung liegt als technisches Problem die Bereitstellung eines Brennstoffzellensystems mit integrierter Wasserstofferzeugung der eingangs genannten Art zugrunde, das eine besonders günstige Nutzung des eingesetzten Wassers ermöglicht und dabei ein gutes Dynamikverhalten unter schwankenden Lastbedingungen zeigt und sich bei Bedarf relativ kompakt bauen läßt.

Die Erfindung löst dieses Problem durch die Bereitstellung eines Brennstoffzellensystems mit den Merkmalen des Anspruchs 1. Bei diesem System für mobile Anwendungen sind charakteristischerweise über einen Kühlkreislauf schählte Wasserrückgewinnungsmittel vorgesehen, mit denen Wasser aus einem von der Wasserstofferzeugungsanlage abgegebenen Prozeßgas und/oder aus dem Kathodenabgas der Brennstoffzellenkathode auskondensiert und in das vorhandene Wasserzufuhrsystem rückgeführt wird, welches Wasser für die Umsetzungsreaktion des Kohlenwasserstoff- oder Kohlenwasserstoffderivat-Einsatzstoffs in der Wasserstofferzeugungsanlage bereitstellt.

Diese Wasserrückgewinnung von in die Wasserstofferzeugungsanlage eingespeistem und/oder an der Brennstoffzellenkathode gebildetem Wasser ermöglicht eine optimale Wassernutzung und damit Wasserbilanz. Dies ist bei mobilen Anwendungen, z.B. in Brennstoffzellenfahrzeugen, von großem Vorteil, da das Wasserzufuhrsystem, für das es in diesem Fall keinen Leitungswasseranschluß gibt, mit einem relativ kleinen Wassertank auskommt.

Gleichzeitig erlaubt die Speisung der einen oder mehreren Brennstoffzellen mit einem wasserstoffhaltigen Produktgas, das vorzugsweise aus hochreinem Wasserstoff besteht, einen hohen Wirkungsgrad für den Brennstoffzellenbetrieb mit gutem Dynamikverhalten bei kompaktem Aufbau.

Bei einem nach Anspruch 2 weitergebildeten Brennstoffzellensystem ist führt das Wasserzufuhrsystem Wasser der Umsetzungsreaktoreinheit und/oder der Wassergas-Shiftreaktoreinheit zu. Ersteres kann insbesondere zur Durchführung einer Wasserdampfreformierungsreaktion des Kohlenwasserstoff- oder Kohlenwasserstoffderivat-Einsatzstoffs dienen, während die Einspeisung von Wasser in die Shiftreaktoreinheit das Wassergasreaktionsgleichgewicht zugunsten vermehrter CO-Umsetzung verschiebt, so daß eine effektive Wassergasreaktion, auch Shiftreaktion genannt, zur Verminderung der CO-Konzentration im wasserstoffhaltigen Produktgas bewirkt werden kann. Des weiteren kann eine Wasserzufuhr zur Brennstoffzellenkathode vorgesehen sein, z.B. zu Kühlzwecken.

Bei einem nach Anspruch 3 weitergebildeten Brennstoffzellensystem ist in der Wasserstofferzeugungsanlage wenigstens eine Wasserstoffabtrennmembran vorgesehen, mit der das wasserstoffhaltige Produktgas vom verbleibenden Umsetzungsrestgas selektiv abgetrennt werden kann, insbesondere der zur Speisung der Brennstoffzellenanode dienende Wasserstoff von bei der Umsetzungsreaktion des Kohlenwasserstoff- oder Kohlenwasserstoffderivat-Einsatzstoffs entstandenem Kohlenmonoxid. Speziell kann diese Gasreinigungsmaßnahme mit einer weiteren Gasreinigungsmaßnahme, wie einer Wassergasreaktion und/oder einer CO-Oxidation kombiniert sein. Das im nicht abgetrennten Umsetzungsrestgas eventuell enthaltene Wasser wird mittels eines entsprechenden Kondensators auskondensiert und steht damit zur erneuten Nutzung im System zur Verfügung. In weiterer Ausgestaltung dieser Maßnahme ist gemäß Anspruch 4 eine zur Umsetzungsreaktoreinheit führende Wasserzufuhrleitung über diesen Umsetzungsrestgas-Wasserkondensator geführt, so daß in ihm das in die Umsetzungsreaktoreinheit eingespeiste Wasser vorerwärmt werden kann.

Bei einem nach Anspruch 5 weitergebildeten System beinhalten die Wasserrückgewinnungsmittel zwei Kondensatoren, von denen einer zur Auskondensation von Wasser aus einem von der Wasserstofferzeugungsanlage abgegebenen Prozeßgas und der andere zur Auskondensation von Wasser aus dem Brennstoffzellenkathodenabgas dient. Des weiteren ist ein gemeinsamer Kühlkreislauf für die beiden Kondensatoren vorgesehen. Im Fall eines Brennstoffzellenfahrzeugs kann der Kühlkreislauf z.B. eine luftgekühlte Kühlereinheit zur Kühlung des zirkulierenden Kühlmittels aufweisen. Der Kühlkreislauf kann zudem auch zur Kühlung der Brennstoffzellenkathode dienen.

Bei einem nach Anspruch 6 weitergebildeten System, in welchem die Wasserstofferzeugungsanlage mit der wenigstens einen Wasserstoffabtrennmembran zur selektiven Abtrennung des wasserstoffhaltigen Produktgases vom Umsetzungsrestgas ausgerüstet ist und die Wasserrückgewinnungsmittel den Umsetzungsrestgas-Wasserkondensator enthalten, sind ein oder zwei Wärmeübertrager vorgesehen, in dem bzw. denen das abgetrennte, wasserstoffhaltige Produktgas mit dem Umsetzungsrestgas stromabwärts des Umsetzungsrestgas-Wasserkondensators und/oder mit dem Kathodenabgas stromabwärts eines Kathodenabgas-Wasserkondensators in Wärmekontakt steht, der zur Auskondensation von Wasser aus dem Kathodenabgas vorgesehen sein kann. Damit kann das abgetrennte Produktgas in einfacher Weise durch das in einem vorgeschalteten Kondensator bereits etwas abgekühlte Umsetzungsrestgas und/oder Kathodenabgas auf ein gewünschtes Maß abgekühlt werden.

In einer weiteren Ausgestaltung des Brennstoffzellensystems mit einer eine Wasserstoffabtrennmembran enthaltenden Wasserstofferzeugungsanlage ist im Umsetzungsrestgasstrom eine Expandereinheit vorgesehen, die eine Entspannung des Umsetzungsrestgases bewirkt und die daraus gewonnene Energie als mechanische Antriebsenergie für eine Pumpeneinheit zur Förderung bzw. Verdichtung des abgetrennten, wasserstoffhaltigen, in die Brennstoffzellenanode einzuspeisenden Produktgases nutzt.

Bei einem nach Anspruch 8 weitergebildeten Brennstoffzellensystem wird das Anodenabgas über eine Mischereinheit dem der Brennstoffzellenanode eingangsseitig zugeführten, wasserstoffhaltigen Produktgas zudosiert und/oder der Wasserstofferzeugungsanlage zugeführt, insbesondere deren Umsetzungsreaktoreinheit. Auf diese Weise verbleibt die im Anodenabgas enthaltene chemische und thermische Energie dem System erhalten.

Bei einem nach Anspruch 9 weitergebildeten System, das wiederum eine mit einer Wasserstoffabtrennmembran ausgerüstete Wasserstofferzeugungsanlage umfaßt, wird das nicht abgetrennte Umsetzungsrestgas zusammen mit dem Kathodenabgas in einer entsprechenden Brennereinheit katalytisch verbrannt, und der katalytischen Brennereinheit ist eine Brennerabgas-Expandereinheit nachgeschaltet, die das Brennerabgas entspannt und die daraus gewonnene Energie als mechanische Antriebsenergie für eine Pumpeneinheit zur Kathodenluftzuführung und/oder zur Zuführung von Luft zur Wasserstofferzeugungsanlage, insbesondere zu deren Umsetzungsreaktoreinheit, nutzt.

Vorteilhafte Ausführungsformen der Erfindung sind in den Zeichnungen dargestellt und werden nachfolgend beschrieben. Hierbei zeigen:
- Fig. 1: eine Blockdiagrammdarstellung eines Brennstoffzellensystems mit einer Wasserstofferzeugungsanlage, die einen autothermen Reaktor und einen nachgeschalteten Membranreaktor aufweist,
- Fig. 2: eine Blockdiagrammdarstellung eines Brennstoffzellensystems mit einer Wasserstofferzeugungsanlage, die seriell hintereinandergeschaltet einen autothermen Reaktor tor, eine Hochtemperatur-Shiftreaktoreinheit und eine Wasserstoffabtrennstufe aufweist,
- Fig. 3: eine Blockdiagrammdarstellung eines Brennstoffzellensystems mit einer Wasserstofferzeugungsanlage, die einen autothermen Reaktor und eine nachgeschaltete Wassergas-Shiftreaktoreinheit, jeweils mit Wasserstoffabtrennmembran, enthält, und
- Fig. 4: eine Blockdiagrammdarstellung eines Brennstoffzellensystems entsprechend Fig. 3, jedoch mit zusätzlicher Gasreinigungsstufe in einer Produktgaszufuhrleitung zur Brennstoffzellenanode.

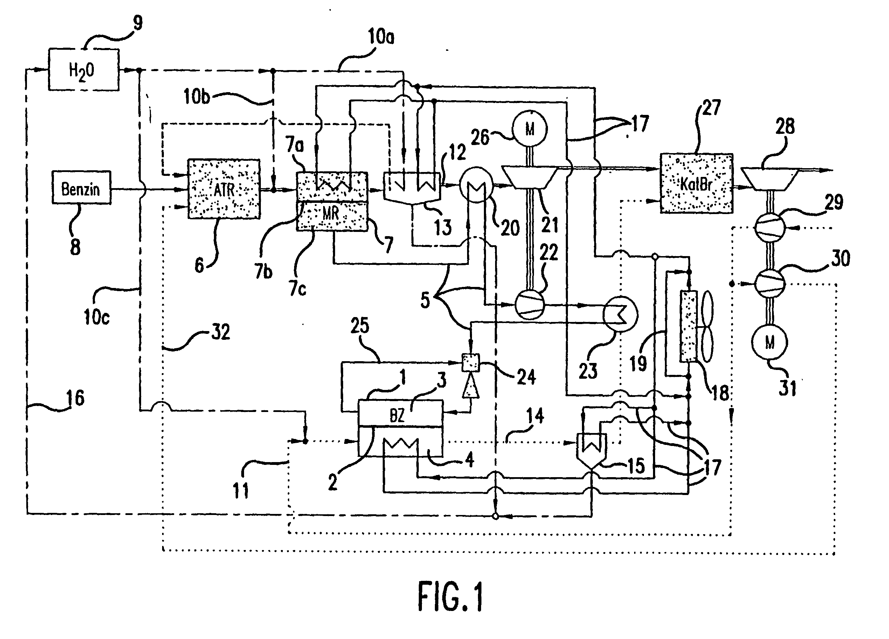

Die Figuren 1 bis 4 zeigen illustrativ und nicht erschöpfend verschiedene mögliche Realisierungen des erfindungsgemäßen mobilen Brennstoffzellensystems, wobei funktionell gleiche Komponenten der Übersichtlichkeit halber jeweils mit denselben Bezugszeichen versehen sind.

Das System von Fig. 1 beinhaltet eine Brennstoffzellenanordnung mit einer oder mehreren Brennstoffzellen 1, von denen stellvertretend eine dargestellt ist und die jeweils in üblicher Weise durch eine Brennstoffzellenmembran 2 voneinander getrennt eine Brennstoffzellenanode 3 und eine Brennstoffzellenkathode 4 umfassen. Die Brennstoffzellenanode 3 wird über eine Produktgasleitung 5 von einem wasserstoffhaltigen Produktgas gespeist, das vorzugsweise aus hochreinem Wasserstoff besteht und von einer zugeordneten Wasserstofferzeugungsanlage geliefert wird.

Im Beispiel von Fig. 1 beinhaltet die Wasserstofferzeugungsanlage einen autothermen Reaktor 6 und eine diesem nachgeschaltete Membranreaktoreinheit 7. Im autothermen Reaktor 6 wird Benzin, das in einem Benzintank 8 bevorratet wird, unter zusätzlicher Einspeisung von Wasser und/oder Luft bei einer Temperatur von vorzugsweise zwischen 800°C und 900°C durch eine autotherme Reformierungsreaktion oder eine partielle Oxidationsreaktion in ein wasserstoffreiches Rohproduktgas umgesetzt. Das Rohproduktgas wird dann im nachgeschalteten Reaktionsraum 7a des Membranreaktors 7 unter zusätzlicher Wasserzudosierung einer Wassergas-Shiftreaktion unterzogen, um vorhandenes Kohlenmonoxid unter zusätzlicher Wasserstofferzeugung in Kohlendioxid umzuwandeln. Die Membranreaktoreinheit 7 ist mit einer herkömmlichen Wasserstoffabtrennmembran 7b ausgerüstet, die den Shiftreaktionsraum 7a von einem Wasserstoffsammelraum 7c trennt, aus dem die Produktgasleitung 5 ausmündet. Auf diese Weise wird im wesentlichen aus Wasserstoff bestehendes Produktgas selektiv über die Abtrennmembran 7b aus dem Shiftreaktionsraum 7a abgetrennt und gelangt über den Wasserstoffsammelraum 7c in die Produktgasleitung 5, über die es zur Brennstoffzellenanode 3 geleitet wird.

Für die Wasserversorgung ist ein Wasserzufuhrsystem mit geschlossenem Wasserkreislauf vorgesehen, der einen Wassertank 9 enthält, in welchem Wasser mit einer Temperatur von z.B. etwa 60°C bevorratet wird. Über einen ersten Wasserzufuhrzweig 10a wird Wasser in den autothermen Reaktor 6 eingespeist, wenn dort eine autotherme Reformierungsreaktion ablaufen soll, in der eine exotherme Oxidationsreaktion mit einer endothermen Wasserdampfreformierung so kombiniert ist, daß eine gewünschte Temperatur selbständig aufrechterhalten wird. Alternativ zu dieser autothermen Reaktionsführung kann die Umsetzungsreaktion für den Einsatzstoff, hier Benzin, unter Wärmeabführung als reine partielle Oxidationsreaktion oder unter Wärmezufuhr als reine Wasserdampfreformierung realisiert sein, wozu in herkömmlicher Weise eine jeweils geeignet ausgelegte und insbesondere ein passendes Katalysatormaterial enthaltene Umsetzungsreaktoreinheit vorgesehen wird. Je nach gewünschter Umsetzungsreaktion wird dem zugeführten Benzin nur Wasser, nur Luft oder sowohl Wasser als auch Luft beigemischt. Bei Bedarf ist der Reaktoreinheit ein Verdampfer vorgeschaltet. Über einen zweiten Wasserzufuhrzweig 10b wird Wasser dem Rohproduktgas an der Eintrittsseite des Membranreaktors 7 beigemischt, um das Reaktionsgleichgewicht der Wassergas-Shiftreaktion im Membranreaktor 7 zugunsten vermehrter CO-Umwandlung mit zusätzlicher Wasserstofferzeugung zu verschieben.

Über einen dritten Wasserzufuhrzweig 10c kann Wasser dem über eine Kathodenluftzufuhrleitung 11 in die Brennstoffzellenkathode 4 eingespeisten Kathodenluftstrom zudosiert werden, z.B. zu Kühlzwecken.

Um eine optimale Wasserbilanz zu erhalten, ist eine Rückgewinnung von Wasser sowohl aus dem nicht über die Wasserstoffabtrennmembran 7b abgetrennten Umsetzungsrestgas als auch aus dem die Brennstoffzellenkathode 4 verlassenden Kathodenabgas vorgesehen. Dazu ist in einer aus dem Shiftreaktionsraum 7a des Membranreaktors 7 ausmündenden Umsetzungsrestgasleitung 12 ein erster Kondensator 13 und in einer aus der Brennstoffzellenkathode 4 ausmündenden Kathodenabgasleitung 14 ein zweiter Kondensator 15 vorgesehen. Das sich im Umsetzungsrestgas- und im Kathodenabgas-Wasserkondensator 13, 15 sammelnde Wasser wird über eine Wasserrückführleitung 16 in den Wassertank 9 zurückgespeist und steht zur erneuten Nutzung im System zur Verfügung. In der Rückspeiseleitung 16 hat das Wasser z.B. eine Temperatur von 20°C und einen Druck von 1bar. Der Umsetzungsrestgas-Wasserkondensator 13 ist des weiteren so ausgelegt, daß er neben dem zugehörigen Zweig des Kühlkreislaufs 17 einen weiteren, mit dem noch warmen Umsetzungsrestgas in Wärmekontakt stehenden Strömungskanal aufweist, über den der zum autothermen Reaktor 6 führende Wasserzufuhrzweig 10a geführt ist, so daß das Wasser durch das Umsetzungsrestgas vorgewärmt den autothermen Reaktor 6 erreicht.

Zur Kühlung der beiden Kondensatoren 13, 15 ist ein gemeinsamer Kühlkreislauf 17 vorgesehen, der ein geeignetes Kühlmittel, z.B. Wasser, und als wärmeabführendes Element eine luftgekühlte Kühlereinheit 18 enthält. Dieser ist eine Bypassleitung 19 zugeordnet, um das Kühlmittel bei Bedarf über ein nicht gezeigtes Ventil steuerbar an der Kühlereinheit 18 vorbeileiten zu können. Die beiden Kondensatoren 13, 15 werden über zwei parallele Leitungszweige des Kühlkreislaufs 17 gekühlt. Ein dritter Leitungszweig des Kühlkreislaufs 17 dient der Kühlung der Brennstoffzellenkathode 4. Ein vierter Zweig des Kühlkreislaufs 17 dient zur Kühlung des Shiftreaktionsraums 7a, der zur Durchführung einer Niedertemperatur-Shiftreaktion auf einer gegenüber dem autothermen Reaktor 6 deutlich niedrigeren Temperatur von typischerweise weniger als 350°C gehalten wird. Wenn sich das System in einem Brennstoffzellenfahrzeug befindet, kann der Kühlkreislauf 17 Teil eines Motorkühlkreislaufes und/oder einer Klimaanlage sein.

Dem Umsetzungsrestgas-Wasserkondensator 13 ist ein erster Produktgas-Wärmeübertrager 20 nachgeschaltet, in welchem das in der Produktgasleitung 5 strömende, abgetrennte Produktgas mit dem über den zugehörigen Kondensator 13 abgekühlten Umsetzungsrestgas in Wärmekontakt steht. Das sich dadurch wieder erwärmende Umsetzungsrestgas wird in einer nachgeschalteten Expandereinheit 21 entspannt, an die mechanisch eine Produktgas-Pumpeneinheit 22 angekoppelt ist. Letztere dient dazu, das abgetrennte Produktgas aus dem Wasserstoffsammelraum 7c abzusaugen und der Brennstoffzellenanode 3 verdichtet zuzuführen. Soweit die Leistung der Expandereinheit 21 nicht ausreicht, das Produktgas vom Druck im Wasserstoffsammelraum 7c, z.B. typischerweise etwa 0,5bar, auf den für die Anodenspeisung gewünschten Druck von z.B. etwa 1,5bar, zu verdichten, wird die Produktgas-Pumpeneinheit 22 ergänzend von einem Antriebsmotor 26 angetrieben. Zur Abkühlung des über diese Pumpeneinheit 22 verdichteten Produktgases ist ein dieser nachgeschalteter, zweiter Produktgaswärmeübertrager 23 vorgesehen, in welchem das verdichtete Produktgas mit dem im zugehörigen Kondensator 15 abgekühlten Kathodenabgas in Wärmekontakt steht. Das somit wieder abgekühlte Produktgas wird dann einer Mischereinheit 24 zugeführt, in welcher ihm über eine Anodenabgasrückführleitung 25 das Brennstoffzellenanodenabgas zudosiert wird und die das dadurch entstehende Brenngasgemisch, das weitestgehend aus Wasserstoff besteht, in die Brennstoffzellenanode 3 einspeist.

Das von der Expandereinheit 21 entspannte Umsetzungsrestgas wird in einer katalytischen Brennereinheit 27 mit dem über die Kathodenabgasleitung 14 zugeführten Kathodenabgas katalytisch verbrannt. Die im entstehenden, heißen Brennerabgas enthaltene Energie wird in einer nachgeschalteten Brennerabgas-Expandereinheit 28 unter Entspannung des Brennerabgases in mechanische Energie umgewandelt, die als Antriebsenergie für eine mechanisch angekoppelte Kathodenluftpumpe 29 und eine ebenfalls mechanisch angekoppelte Reaktorluftpumpe 30 genutzt wird. Soweit zu deren Antrieb die von der Expandereinheit 28 gelieferte Energie nicht ausreicht, wird sie von einem angekoppelten Antriebsmotor 31 geliefert. Die Expandereinheit 28 entspannt das Brennerabgas von einem Druck von z.B. 2,4bar auf einen Druck von z.B. 1bar. Die Kathodenluftpumpe 29 verdichtet von der Atmosphäre angesaugte Luft auf einen gewünschten Druck von z.B. 2,6bar, während die dazu seriell geschaltete Reaktorluftpumpe 30 einen Teil der von der Kathodenluftpumpe 29 komprimierten Luft aus derKathodenluftzufuhrleitung 11 abzieht und auf einen höheren Druck von z.B. 12bar verdichtet, wonach die solchermaßen höher verdichtete Luft über eine Reaktorluftzufuhrleitung 32 in gewünschter Menge in den autothermen Reaktor 6 eingespeist wird.

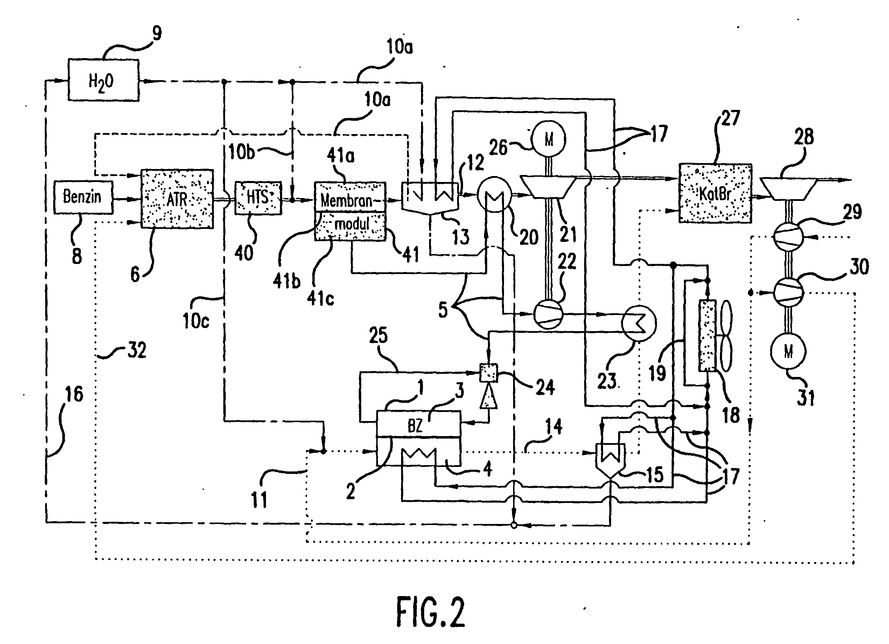

Fig. 2 zeigt eine Variante des Brennstoffzellensystems von Fig. 1, das sich von diesem im wesentlichen nur dadurch unterscheidet, daß dem autothermen Reaktor 6 statt des Membranreaktors 7 von Fig. 1 zwei Gasreinigungsstufen nachgeschaltet sind, nämlich eine Hochtemperatur-Shiftreaktoreinheit 40 und eine Prozeßgasabtrennstufe 41. Im Unterschied zur gekühlten Membranreaktoreinheit 7 von Fig. 1 ist die Hochtemperatur-Shiftreaktoreinheit 40 zur Durchführung einer Wassergas-Shiftreaktion in einem erhöhten Temperaturbereich ausgelegt, der dem Temperaturniveau im autothermen Reaktor 6 entspricht oder nur wenig darunter liegt, so daß die Hochtemperatur-Shiftreaktoreinheit 40 nicht gekühlt werden braucht. Das für die Hochtemperatur-Shiftreaktion erforderliche Wasser wird durch Einspeisung von Wasser über den ersten Wasserzufuhrzweig 10a in den autothermen Reaktor 6 in entsprechendem Überschuß bereitgestellt, kann alternativ jedoch auch über einen dann vorzusehenden weiteren Wasserzufuhrzweig direkt in die Hochtemperatur-Shiftreaktoreinheit 40 eingespeist werden. Die nachfolgende Produktgasabtrennstufe 41 beinhaltet eine Wasserstoffabtrennmembran 41b, die einen an die Hochtemperatur-Shiftreaktoreinheit 40 angeschlossenen Gasgemischraum 41a von einem Wasserstoffsammelraum 41c trennt und über die im wesentlichen nur Wasserstoff als das der Brennstoffzellenanode 3 zuzuführende Produktgas vom Gasgemischraum 41a in den Wasserstoffsammelraum 41c übertreten läßt. Vorzugsweise ist der Gasgemischraum 41a zudem zur Durchführung einer ergänzenden Niedertemperatur-Shiftreaktion ausgelegt, um im Ausgangsgasstrom der Hochtemperatur-Shiftreaktoreinheit 40 eventuell noch enthaltenes Kohlenmonoxid mit Wasser zu Kohlendioxid und weiterem Wasserstoff umzusetzen. Dazu wird über den zweiten Wasserzufuhrzweig 10b das benötigte Wasser zudosiert, das gleichzeitig eine Abkühlung des dem Gasgemischraum 41a zugeführten Gasgemischs auf ein für die Niedertemperatur-Shiftreaktion geeignetes Temperaturniveau bewirkt. Der den Membranreaktor 7 von Fig. 1 kühlende Zweig des Kühlkreislaufs 17 kann in diesem Fall entfallen. Im übrigen besitzt das System von Fig. 2 denselben Aufbau und dieselbe Funktionsweise wie dasjenige von Fig. 1, so daß diesbezüglich auf die obige Beschreibung zu Fig. 1 verwiesen werden kann.

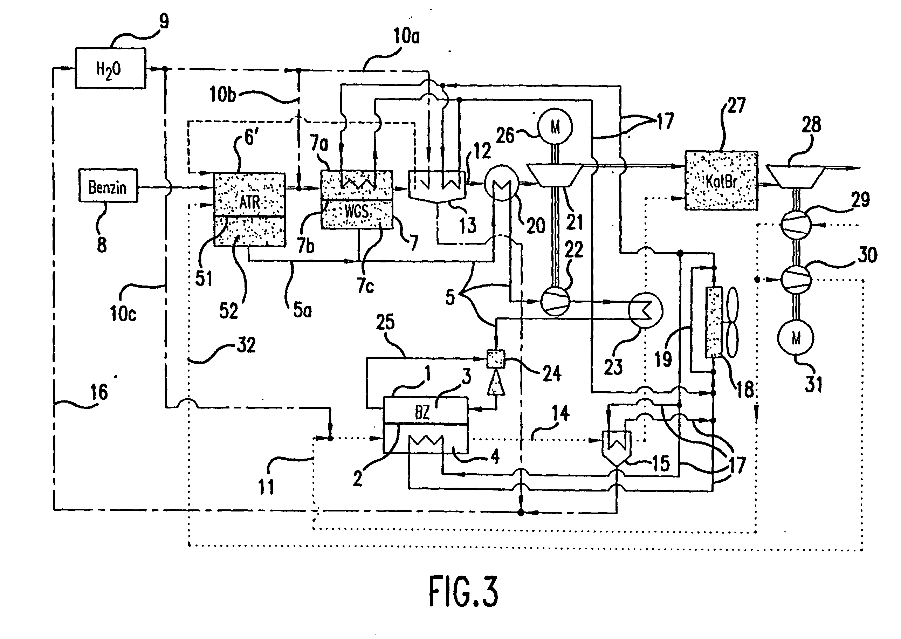

Fig. 3 zeigt ein weiteres, gegenüber demjenigen von Fig. 1 etwas modifiziertes Brennstoffzellensystem, wobei wiederum funktionell gleiche Elemente mit denselben Bezugszeichen versehen sind und zu deren Bedeutung auf die Beschreibung von Fig. 1 verwiesen werden kann. Das System von Fig. 3 unterscheidet sich von demjenigen der Fig. 1 dadurch, daß ein autothermer Reaktor 6' verwendet ist, in den eine Produktgasabtrennstufe integriert ist, während er ansonsten demjenigen von Fig. 1 entspricht. Dazu ist eine Begrenzungswand des Umsetzungsreaktionsraums des autothermen Reaktors 6' von einer Wasserstoffabtrennmembran 51 gebildet, an deren anderer Seite ein Wasserstoffsammelraum 52 angrenzt. Im Reaktionsraum des autothermen Reaktors 6' gebildeter Wasserstoff kann somit direkt und selektiv abgetrennt werden und gelangt als Produktgas in den Wasserstoffsammelraum 52 und von dort über einen zusätzlichen Anschlußzweig 5a in die Produktgasleitung 5. Die im autothermen Reaktor 6' nicht abgetrennten Gasgemischbestandteile gelangen in den Reaktionsraum 7a der nachgeschalteten Membranreaktoreinheit 7, die wie beim System von Fig. 1 als gekühlte Niedertemperatur-Shiftreaktorstufe fungiert, um im Gasgemisch enthaltenes Kohlenmonoxid unter zusätzlicher Wasserstoffbildung in Kohlenmonoxid umzusetzen und den zusätzlich gebildeten Wasserstoff über die Abtrennmembran 7b in den zugehörigen Wasserstoffsammelraum 7c abzuziehen, von wo er zusammen mit dem im autothermen Reaktor 6' abgetrennten Wasserstoff neben eventuellen geringfügigen Verunreinigungen als im wesentlichen aus Wasserstoff bestehendes Produktgas über die Produktgasleitung 5 zur Brennstoffzellenanode 3 geleitet wird. Die direkte Abtrennung von Wasserstoff vom Umsetzungsreaktionsraum des autothermen Reaktors 6' hat den Vorteil, daß sich dort wie auch in der nachgeschalteten Abtrennstufe 7 das Reaktionsgleichgewicht zugunsten zusätzlicher Wasserstoffbildung verschieben läßt. Im übrigen entspricht das System von Fig. 3 wiederum völlig demjenigen von Fig. 1, so daß insoweit auf die obige Beschreibung zu Fig. 1 verwiesen werden kann.

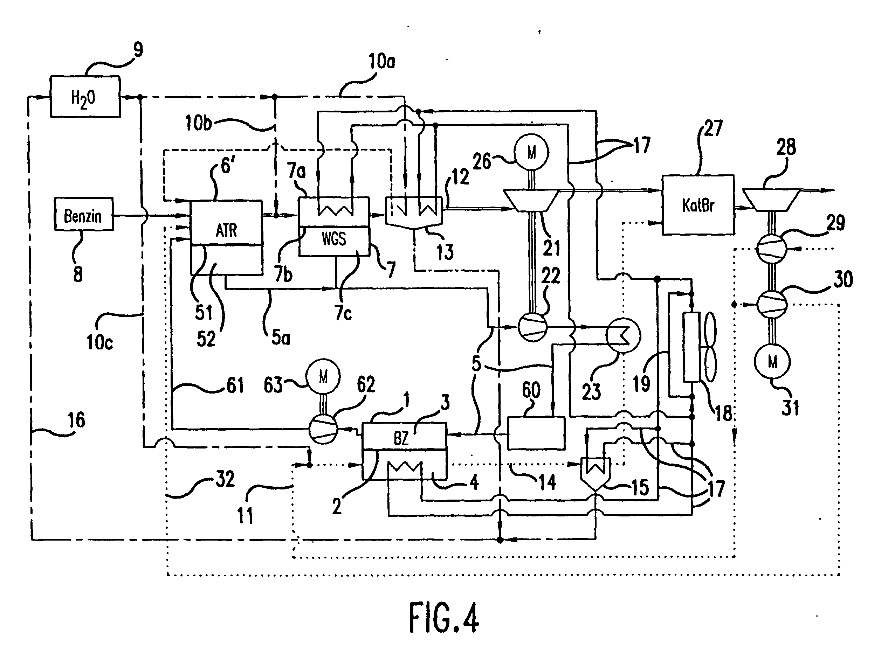

Fig. 4 zeigt ein gegenüber demjenigen von Fig. 3 modifiziertes Brennstoffzellensystem, wobei wiederum funktionell gleiche Elemente mit denselben Bezugszeichen versehen sind und zu deren Erläuterung auf die obige Beschreibung zu Fig. 3 verwiesen wird. Das System von Fig. 4 unterscheidet sich von demjenigen der Fig. 3 zum einen darin, daß in der Produktgasleitung 5 vor der Brennstoffzellenanode 3 eine Gasreinigungsstufe 60 vorgesehen ist, die zur Umsetzung von eventuell noch im zugeführten Produktgas enthaltenen, für die Brennstoffzellenanode 3 schädlichen Bestandteilen, insbesondere Kohlenmonoxid, dient und hierzu passend ausgelegt ist, z.B. als CO-Oxidationseinheit, als Methanisierungseinheit zur CO-Umsetzung durch eine Methanisierungsreaktion, als weitere Wassergas-Shiftreaktoreinheit und/oder als weitere Wasserstoffabtrennmembraneinheit. Durch die Verwendung der zusätzlichen Gasreinigungsstufe 60 genügt es, die Abtrennmembranen 7, 51 im Membranreaktor 7 und im autothermen Reaktor 6' auf eine mäßig hohe Wasserstoffselektivität auszulegen, was gegenüber der Bereitstellung einer sehr hochselektiven Wasserstoffabtrennmembran einen reduzierten Aufwand bedeutet. Des weiteren ist beim System von Fig. 4 kein Wärmekontakt des abgetrennten Produktgases mit dem Umsetzungsrestgas vorgesehen, so daß der erste Wärmeübertrager 20 des Systems von Fig. 3 entfällt.

Zum anderen wird beim System von Fig. 4 das Anodenabgas nicht wie bei den übrigen gezeigten Systemen zur Anodeneintrittsseite rückgeführt, sondern über eine Anodenabgasleitung 61 in den Umsetzungsreaktionsraum des autothermen Reaktors 6' eingeleitet. Ein Anodenabgaskompressor 62, der von einem Motor 63 angetrieben wird, sorgt für die zur Einspeisung in den autothermen Reaktor 6' nötige Verdichtung des Anodenabgases. Alternativ kann zum Antrieb des Anodenabgaskompressors 62 eine der beiden Expandereinheiten 21, 28 beitragen. Im übrigen entspricht das System von Fig. 4 in Aufbau und Funktionsweise wiederum völlig demjenigen von Fig. 3, so daß insoweit auf dessen obige Beschreibung verwiesen werden kann. Es versteht sich, daß alternativ ein Teil des Anodenabgases der Wasserstofferzeugungsanlage zugeführt und ein Teil zur Anodeneintrittsseite rückgeführt werden kann, wozu dann ein geeignetes, ansteuerbares Ventil zur gewünschten Aufteilung des Anodenabgasstroms vorgesehen wird.

Die gezeigten Beispiele machen deutlich, daß das erfindungsgemäße Brennstoffzellensystem eine optimale Wasserbilanz besitzt, indem es eine leichte, praktisch vollständige Rückgewinnung des Prozeßwassers ermöglicht, was den Einsatz des Systems in mobilen Anwendungen erleichtert. Durch die diversen Gasreinigungsmaßnahmen läßt sich mit der Wasserstofferzeugungsanlage ein Produktgas als Brennstoff für die Brennstoffzellenanode bereitstellen, das von Wasserstoff mit einer Reinheit größer als 99,99999% gebildet sein kann. Insbesondere wird das Anodenschadgas Kohlenmonoxid ausreichend entfernt, so daß eine Brennstoffzellenschädigung vermieden wird. Der Betrieb der einen oder mehreren Brennstoffzellen, z.B. vom PEM-Typ, mit derart hochreinem Wasserstoff ermöglicht einen hohen Systemwirkungsgrad. Hierzu trägt auch eine hohe Umwandlungsrate des eingesetzten Kohlenwasserstoff- oder Kohlenwasserstoffderivat-Einsatzstoffs bei, wie Benzin, Erdgas oder Methanol. Das erfindungsgemäße Brennstoffzellensystem läßt sich vergleichsweise einfach und kompakt bauen, so daß sich insbesondere die Anforderungen für den Einbau in Brennstoffzellenfahrzeugen erfüllen lassen und zudem ein sehr gutes Dynamikverhalten unter schwankenden Lastbedingungen ohne Verwendung aufwendiger Regelungsund Steuereinheiten gegeben ist. Außerdem ermöglicht dies eine gute Kaltstartfähigkeit. Das erfindungsgemäße System besitzt eine relativ lange Lebensdauer, eine geringe Verschmutzungsempfindlichkeit und damit eine gute Schwefeltoleranz und kann in hoher Stückzahl zu vergleichsweise niedrigen Kosten gefertigt werden.

Es versteht sich, daß neben den gezeigten weitere Realisierungen des erfindungsgemäßen Systems möglich sind. So kann je nach Anwendungsfall auf einen der beiden Kondensatoren und/oder auf den katalytischen Brenner und/oder auf eine oder beide Expandereinheiten verzichtet werden. Zudem kann anstelle der gezeigten jede andere herkömmliche Wasserstofferzeugungsanlage mit einer Wassergas-Shiftreaktionseinheit eingesetzt werden, insbesondere auch solche ohne selektive Wasserstoffabtrennstufe. In diesem Fall wird das von der Wasserstofferzeugungsanlage erzeugte Produktgas ohne selektive Wasserstoffabtrennung direkt oder vorzugsweise über eine oder mehrere Gasreinigungsstufen, wie eine CO-Oxidationseinheit, der Brennstoffzellenanode zugeführt.

## Patentansprüche

1. Mobiles Brennstoffzellensystem mit
- wenigstens einer Brennstoffzelle (1),
- einer Wasserstofferzeugungsanlage zur Speisung der Brennstoffzellenanode (3) mit einem wasserstoffhaltigen Produktgas aus einer Umsetzungsreaktion eines Kohlenwasserstoff- oder Kohlenwasserstoffderivat-Einsatzstoffs unter Beteiligung von über ein Wasserzufuhrsystem (9, 10a, 10b, 10c) zugeführtem Wasser, wobei die Wasserstofferzeugungsanlage eine Umsetzungsreaktoreinheit (6) und eine nachgeschaltete Wassergas-Shiftreaktoreinheit (7) aufweist, und
- Wasserrückgewinnungsmitteln (13, 15, 16) zur Rückführung von Wasser in das Wasserzufuhrsystem (9, 10a, 10b, 10c),
**dadurch gekennzeichnet, dass**
die Wasserrückgewinnungsmittel (13, 15, 16) durch einen Kühlkreislauf (17) gekühlte Mittel (13, 15) zur Auskondensation von Wasser aus einem von der Wasserstofferzeugungsanlage abgegebenen Prozeßgas und/oder aus dem von der Brennstoffzellenkathode (4) abgeführten Kathodenabgas und Mittel zur Rückführung des auskondensierten Wassers in das Wasserzufuhrsystem (9, 10a, 10b, 10c) aufweisen.

2. Mobiles Brennstoffzellensystem nach Anspruch 1, weiter
**dadurch gekennzeichnet, dass**
das Wasserzufuhrsystem eine Wasserzufuhrleitung (10a) für die Umsetzungsreaktoreinheit und/oder eine Wasserzufuhrleitung (10b) für die Wassergas-Shiftreaktoreinheit und/oder eine Wasserzufuhrleitung (10c) für die Brennstoffzellenkathode (4) aufweist.

3. Mobiles Brennstoffzellensystem nach Anspruch 1 oder 2, weiter
**dadurch gekennzeichnet, dass**
- die Wasserstofferzeugungsanlage wenigstens eine Wasserstoffabtrennmembran (7b) zur selektiven Abtrennung des der Brennstoffzellenanode (3) zugeführten wasserstoffhaltigen Produktgases vom Umsetzungsrestgas aufweist und
- die Wasserrückgewinnungsmittel einen Kondensator (13) zur Auskondensation von Wasser aus dem Umsetzungsrestgas aufweisen.

4. Mobiles Brennstoffzellensystem nach Anspruch 3, weiter
**dadurch gekennzeichnet, dass**
die Wasserzufuhrleitung (10a) für die Umsetzungsreaktoreinheit (6) zur Erwärmung des hindurchgeleiteten Wassers über den Umsetzungsrestgas-Wasserkondensator (13) geführt ist.

5. Mobiles Brennstoffzellensystem nach einem der Ansprüche 1 bis 4, weiter
**dadurch gekennzeichnet, dass**
die Wasserrückgewinnungsmittel einen ersten Kondensator (13) zur Auskondensation von Wasser aus einem von der Wasserstofferzeugungsanlage abgegebenen Prozeßgas und einen zweiten Kondensator (15) zur Auskondensation von Wasser aus dem Abgas der Brennstoffzellenkathode (4) aufweisen und ein gemeinsamer Kühlkreislauf (17) für die beiden Kondensatoren vorgesehen ist.

6. Mobiles Brennstoffzellensystem nach einem der Ansprüche 3 bis 5, weiter
**gekennzeichnet durch**
- einen ersten Wärmeübertrager (20), in welchem das selektiv abgetrennte, wasserstoffhaltige Produktgas mit dem Umsetzungsrestgas stromabwärts des Umsetzungsrestgas-Wasserkondensators (13) in Wärmekontakt steht, und/oder
- einen zweiten Wärmeübertrager (23), in welchem das selektiv abgetrennte, wasserstoffhaltige Produktgas mit dem Kathodenabgas stromabwärts eines Kathodenabgas-Wasserkondensators (15) in Wärmekontakt steht.

7. Mobiles Brennstoffzellensystem nach einem der Ansprüche 3 bis 6, weiter
**gekennzeichnet durch**
eine im Umsetzungsrestgasstrom liegende Umsetzungsrestgas-Expandereinheit (21) und eine mit dieser mechanisch gekoppelte, im abgetrennten, wasserstoffhaltigen Produktgasstrom liegende Produktgas-Pumpeneinheit (22).

8. Mobiles Brennstoffzellensystem nach einem der Ansprüche 1 bis 7, weiter
**gekennzeichnet durch**
- eine Mischereinheit (24) zur Zudosierung von Anodenabgas zum abgetrennten, wasserstoffhaltigen Produktgas und/oder
- eine Anodenabgasleitung (61) zur Zuführung von Anodenabgas zur Wasserstofferzeugungsanlage.

9. Mobiles Brennstoffzellensystem nach einem der Ansprüche 3 bis 8, weiter
**gekennzeichnet durch**
- eine katalytische Brennereinheit (27), der das Umsetzungsrestgas und das Kathodenabgas zugeführt werden, und
- eine der katalytischen Brennereinheit nachgeschaltete Brennerabgas-Expandereinheit (28), an die mechanisch eine Pumpeneinheit (29, 30) zur Zuführung von Luft zur Brennstoffzellenkathode (4) und/oder zur Wasserstofferzeugungsanlage angekoppelt ist.

## Claims

1. Mobile fuel cell system, having
- at least one fuel cell (1),
- a hydrogen generation system for feeding a hydrogen-containing product gas derived from a conversion reaction of a hydrocarbon or hydrocarbon-derivative feed material with the intervention of water supplied via a water supply system (9, 10a, 10b, 10c), to the fuel cell anode (3), the hydrogen generation system having a conversion reactor unit (6) and a downstream water gas shift reactor unit (7), and
- water recovery means (13, 15, 16) for recycling water into the water supply system (9, 10a, 10b, 10c),
**characterized in that** the water recovery means (13, 15, 16) have means (13, 15), which are cooled by a cooling circuit (17), for condensing water out of a process gas released by the hydrogen generation system and/or out of the cathode exhaust gas discharged from the fuel cell cathode (4), and means for recycling the condensed water into the water supply system (9, 10a, 10b, 10c).

2. Mobile fuel cell system according to Claim 1, also **characterized in that** the water supply system has a water supply line (10a) for the conversion reactor unit and/or a water supply line (10b) for the water gas shift reactor unit and/or a water supply line (10c) for the fuel cell cathode (4).

3. Mobile fuel cell system according to Claim 1 or 2, also **characterized in that**
- the hydrogen generation system has at least one hydrogen-separation membrane (7b) for selectively separating the hydrogen-containing product gas supplied to the fuel cell anode (3) from residual conversion gas, and
- the water recovery means have a condenser (13) for condensing water out of the residual conversion gas.

4. Mobile fuel cell system according to Claim 3, also **characterized in that** the water supply line (10a) for the conversion reactor unit (6) is routed via the residual conversion gas water condenser (13), in order to heat the water which is passed through the said water supply line.

5. Mobile fuel cell system according to one of Claims 1 to 4, also **characterized in that** the water recovery means have a first condenser (13) for condensing water out of a process gas released from the hydrogen generation system and a second condenser (15) for condensing water out of the exhaust gas from the fuel cell cathode (4), and a common cooling circuit (17) is provided for the two condensers.

6. Mobile fuel cell system according to one of Claims 3 to 5, also **characterized by**
- a first heat exchanger (20), in which the hydrogen-containing product gas which has been selectively separated off is in thermal contact with the residual conversion gas downstream of the residual conversion gas water condenser (13), and/or
- a second heat exchanger (23), in which the hydrogen-containing product gas which has been selectively separated off is in thermal contact with the cathode exhaust gas downstream of a cathode exhaust gas water condenser (15).

7. Mobile fuel cell system according to one of Claims 3 to 6, also **characterized by** a residual conversion gas expander unit (21), which is positioned in the residual conversion gas stream, and a product gas pump unit (22), which is mechanically coupled to the residual conversion gas expander unit and is located in the hydrogen-containing product gas stream that has been separated off.

8. Mobile fuel cell system according to one of Claims 1 to 7, also **characterized by**
- a mixer unit (24) for metering anode exhaust gas to the hydrogen-containing product gas which has been separated off, and/or
- an anode exhaust-gas line (61) for supplying anode exhaust gas to the hydrogen generation system.

9. Mobile fuel cell system according to one of Claims 3 to 8, also **characterized by**
- a catalytic burner unit (27) to which the residual conversion gas and the cathode exhaust gas are supplied, and
- a burner exhaust gas expander unit (28), which is connected downstream of the catalytic burner unit and to which a pump unit (29, 30) for supplying air to the fuel cell cathode (4) and/or to the hydrogen generation system is mechanically coupled.

## Revendications

1. Système de cellules à combustible mobile avec
- au moins une cellule à combustible (1),
- un dispositif produisant de l'hydrogène destiné à alimenter l'anode (3) de la cellule à combustible en produit gazeux contenant de l'hydrogène obtenu par une réaction de conversion d'un hydrocarbure ou d'un dérivé d'hydrocarbure utilisé, par addition d'eau participant à la réaction, cette eau étant acheminée par le biais d'un système d'alimentation en eau (9, 10a, 10b, 10c), le dispositif produisant de l'hydrogène comportant une unité réacteur de conversion (6) et une unité réacteur shift à gaz à l'eau (7) montée en aval et
- des moyens de récupération de l'eau (13, 15, 16) destinés à recirculer l'eau dans le système d'alimentation en eau (9, 10a, 10b, 10c) ,
**caractérisé en ce que**
les moyens de récupération de l'eau (13, 15, 16) comportent des moyens (13, 15) refroidis par un circuit de refroidissement (17) destinés à extraire par condensation de l'eau d'un gaz formé lors d'un processus et émis par le dispositif produisant de l'hydrogène et/ou de l'effluent gazeux de la cathode évacué par la cathode (4) de la cellule à combustible et des moyens destinés à recirculer l'eau extraite par condensation dans le système d'alimentation en eau (9, 10a, 10b, 10c).

2. Système de cellules à combustible mobile selon la revendication 1, en outre
**caractérisé en ce que**
le système d'alimentation en eau comporte une conduite d'amenée d'eau (10a) pour l'unité réacteur de conversion et/ou une conduite d'amenée d'eau (10b) pour l'unité réacteur shift à gaz à l'eau et/ou une conduite d'amenée d'eau (10c) pour la cathode (4) de la cellule à combustible.

3. Système de cellules à combustible mobile selon la revendication 1 ou 2, en outre
**caractérisé en ce que**
- le dispositif produisant de l'hydrogène comporte au moins une membrane de séparation d'hydrogène (7b) destinée à séparer sélectivement le produit gazeux contenant de l'hydrogène amené à l'anode (3) de la cellule à combustible du gaz de conversion résiduaire et
- les moyens de récupération de l'eau comportent un condensateur (13) pour extraire par condensation l'eau du gaz de conversion résiduaire.

4. Système de cellules à combustible mobile selon la revendication 3, en outre
**caractérisé en ce que**
l'on fait passer la conduite d'amenée d'eau (10a) pour l'unité réacteur de conversion (6) par le condensateur eau-gaz de conversion résiduaire (13) afin de faire chauffer l'eau qu'elle véhicule.

5. Système de cellules à combustible mobile selon l'une quelconque des revendications 1 à 4, en outre
**caractérisé en ce que**
les moyens de récupération de l'eau comportent un premier condensateur (13) pour extraire par condensation de l'eau d'un gaz formé lors d'un processus et émis par le dispositif produisant de l'hydrogène et un deuxième condensateur (15) destiné à extraire par condensation de l'eau de l'effluent gazeux de la cathode (4) de la cellule à combustible et qu'il est prévu un circuit de refroidissement (17) commun aux deux condensateurs.

6. Système de cellules à combustible mobile selon l'une quelconque des revendications 3 à 5, en outre
**caractérisé par**
- un premier échangeur de chaleur (20) dans lequel le produit gazeux contenant de l'hydrogène que l'on a séparé sélectivement est en contact thermique avec le gaz de conversion résiduaire en aval du condensateur eau-gaz de conversion résiduaire (13), et/ou
- un deuxième échangeur de chaleur (23) dans lequel le produit gazeux contenant de l'hydrogène que l'on a séparé sélectivement est en contact thermique avec l'effluent gazeux de la cathode en aval du condensateur eau-effluent gazeux de la cathode (15).

7. Système de cellules à combustible mobile selon l'une quelconque des revendications 3 à 6, en outre
**caractérisé par**
une unité détendeur gaz de conversion résiduaire (21) située dans le flux de gaz de conversion résiduaire et une unité pompe (22) pour produit gazeux couplée mécaniquement au détendeur et se trouvant dans le flux de produit gazeux contenant de l'hydrogène que l'on a séparé.

8. Système de cellules à combustible mobile selon l'une quelconque des revendications 1 à 7, en outre
**caractérisé par**
- une unité mélangeur (24) pour additionner de l'effluent gazeux de l'anode au produit gazeux contenant de l'hydrogène que l'on a séparé et/ou
- une conduite pour l'effluent gazeux de l'anode (61) destinée à amener l'effluent gazeux de l'anode au dispositif produisant de l'hydrogène.

9. Système de cellules à combustible mobile selon l'une quelconque des revendications 3 à 8, en outre
**caractérisé par**
- une unité brûleur catalytique (27) à laquelle sont amenés le gaz de conversion résiduaire et l'effluent gazeux de la cathode et
- une unité détendeur (28) d'effluent gazeux du brûleur montée en aval de l'unité brûleur catalytique à laquelle est couplée mécaniquement une unité pompe (29, 30) pour amener de l'air à la cathode (4) de la cellule à combustion et/ou au dispositif produisant de l'hydrogène.
